# EUROPÄISCHE PATENTSCHRIFT

(11) **EP 3 417 183 B1**
(45) Veröffentlichungstag und Bekanntmachung des Hinweises auf die Patenterteilung: **01.01.2020**
(21) Anmeldenummer: 17700524.6
(22) Anmeldetag: 16.01.2017
(51) Int. Cl.: F16C 11/06

(54) **KUGELGELENK**
BALL JOINT
ARTICULATION À ROTULE

(30) Priorität: 18.02.2016 DE 102016202532
(43) Veröffentlichungstag der Anmeldung: 26.12.2018
(73) Patentinhaber: ZF Friedrichshafen AG, 88046 Friedrichshafen (DE); Honda Motor Co., Ltd., Tokyo 107-8556 (JP)
(72) Erfinder: GRANNEMANN, Bernd, 32339 Espelkamp-Frotheim (DE); PYDDE, Lutz, 49577 Ankum (DE); RECHTIEN, Martin, 49434 Neuenkirchen (DE); YU, Jinghong, Raymond, Ohio 43067 (US)
(74) Vertreter: Girodo, Marco
(86) Internationale Anmeldenummer: PCT/EP2017/050752
(87) Internationale Veröffentlichungsnummer: WO 2017/140444

(56) Entgegenhaltungen:
- DE-A1-102011 075 323
- DE-A1-102011 075 324
- US-A- 3 493 280

## Beschreibung

Die Erfindung betrifft ein Kugelgelenk mit veränderlichem Reibwiderstand, insbesondere für ein Fahrzeug, gemäß dem Oberbegriff des Patentanspruchs 1 sowie ein Getriebe gemäß Anspruch 16.

Kugelgelenke kommen seit langem in Fahrzeugen, insbesondere in deren Fahrwerk in unterschiedlichen Bauformen zum Einsatz. Sie dienen ganz allgemein dazu zwei Bauteile dreh- und schwenkbeweglich miteinander zu verbinden. Als wesentliche Bauelemente weist ein Kugelgelenk einen Kugelzapfen sowie ein Gelenkgehäuse auf. Der Kugelzapfen ist dabei mit einer Gelenkkugel versehen, die von dem Gelenkgehäuse aufgenommen wird, so dass der Kugelzapfen gegenüber dem Gelenkgehäuse gelenkig gelagert ist. Bei Relativbewegungen des Kugelzapfens gegenüber dem Gelenkgehäuse aufgrund bestimmungsgemäßer Dreh- oder Schwenkbewegungen entsteht zwischen der Oberfläche des Kugelzapfens und dem Gelenkgehäuse bzw. einer dem Gelenkgehäuse zugehörigen Lagerschale Reibung. Diese Reibung setzt der Bewegung des Kugelzapfens gegenüber dem Gelenkgehäuse einen Widerstand entgegen.

Aus verschiedenen Gründen besteht bei Kugelgelenken für bestimmte Anwendungen der Bedarf, den Reibungswiderstand des Kugelgelenks aktiv beeinflussen zu können. In konstruktiver Hinsicht lässt sich dies beispielsweise verwirklichen, indem das Gelenkgehäuse zwei relativ zueinander bewegbare Gehäuseteile umfasst, die an gegenüberliegenden Seiten der Gelenkkugel backenartig angreifen, wobei sich wenigstens eines der beiden Gehäuseteile bewegen lässt, um auf diese Weise die Gelenkkugel in unterschiedlichem Maße zwischen den zueinander bewegbaren Gehäuseteilen zu klemmen. Abhängig vom ausgeübten Druck auf die Gelenkkugel lässt sich auf diese Weise der Reibwiderstand des Kugelgelenks aktiv beeinflussen. Eine konkrete Ausführung eines Kugelgelenks mit veränderlichem Reibwiderstand ist aus DE 10 2011 075 324 A1 und DE 10 2011 075 323 A1, die jeweils ein Kugelgelenk gemäß des Oberbegriffs des Anspruchs 1 offenbaren, bekannt. Bei dem in DE 10 2011 075 323 A1 offenbarten Kugelgelenk umfasst das Gelenkgehäuse ein feststehendes Gehäuseteil sowie ein relativ dazu in Axialrichtung bewegbares Gehäuseteil in Form eines Rings. Dem Kugelgelenk ist weiterhin ein Getriebe zugeordnet, das zur Wandlung der rotatorischen Bewegung (Drehen) einer Schraube in die translatorische Bewegung (Schieben) des Gehäuserings dient, um auf diese Weise über den Gehäusering einen veränderlichen Druck auf die Gelenkkugel auszuüben. Zur Wandlung der rotatorischen in eine translatorische Bewegung sind in dem Getriebe drei Kugeln angeordnet, von denen jede auf einer eigenen spiralförmigen, axial ansteigenden Kugelbahn eines drehbaren ersten Getriebeteils geführt ist. Dieses erste Getriebeteil stützt sich über die Kugeln gegenüber einem zweiten, gehäusefesten Getriebeteil ab, mit dem Effekt, dass sich die axiale Position des ersten Getriebeteiles in Abhängigkeit vom eingestellten Drehwinkel verändert. Das zum Einsatz kommende Getriebe weist einen deutlich höheren Wirkungsgrad als beispielsweise ein Spindeltrieb auf, jedoch besteht der Nachteil, dass die erforderlichen mehreren (drei) spiralförmigen, axial ansteigenden Kugelbahnen technisch aufwändig in der Fertigung sind und zudem den möglichen Drehwinkel - und damit den Hub des Getriebes - sowie die Anzahl einsetzbarer Kugeln stark begrenzen. Zudem entsteht aufgrund des sich in der axialen Projektion kreuzenden Verlaufs der spiralförmigen Kugelbahnen eine in kinematischer Hinsicht nicht ideale Führung, welche neben einer geringen Rollreibung nachteilig hohe Gleitreibungsanteile verursacht.

Es ist daher eine Aufgabe der vorliegenden Erfindung, ein Kugelgelenk der eingangs genannten Art anzugeben, welches günstig zu fertigen ist, aufgrund eines möglichst hohen möglichen Drehwinkels einen verhältnismäßig hohen Getriebehub aufweist und das sich auch mit mehr als drei Kugeln ausstatten lässt. Eine weitere Aufgabe der vorliegenden Erfindung ist es, ein Getriebe für ein solches Kugelgelenk anzugeben.

Die genannte Aufgabe wird gelöst durch ein Kugelgelenk gemäß den Merkmalen des Patentanspruchs 1. Es handelt sich dabei um ein Kugelgelenk mit veränderlichem Reibwiderstand, das sich insbesondere für ein Fahrzeug eignet und welches im Wesentlichen einen Kugelzapfen mit einer Gelenkkugel sowie ein auf besondere Art gestaltetes Getriebe aufweist. Dabei ist die Gelenkkugel in einem Gelenkgehäuse aufgenommen, um diesem gegenüber gelenkig gelagert zu sein, wobei das Gelenkgehäuse zwei relativ zueinander bewegbare Gehäuseteile umfasst, die an gegenüberliegenden Seiten der Gelenkkugel angreifen. Mittels des Getriebes lässt sich zumindest eines der Gehäuseteile bewegen, um einen veränderlichen Druck auf die Gelenkkugel auszuüben. Erfindungsgemäß zeichnet sich das Kugelgelenk dadurch aus, dass das Getriebe ein erstes und ein zweites Getriebeelement aufweist, an denen jeweils eine, bezogen auf eine Rotationsachse einzige wendelförmig verlaufende Kugelbahn ausgebildet ist, wobei sich das erste und das zweite Getriebeelement in Axialrichtung über wenigstens eine zwischen den Kugelbahnen der Getriebeelemente geführte Kugel aufeinander abstützen. Dabei ist das erste Getriebeelement axial verschiebbar gelagert und mit dem beweglichen Gehäuseteil in Druckkontakt bringbar, während das zweite Getriebeelement um die Rotationsachse drehbar gelagert ist, so dass sich durch Drehung des zweiten Getriebeelements das erste Getriebeelement axial verschieben lässt, um auf das bewegliche Gehäuseteil eine Axialkraft auszuüben.

Indem bei dem zum Einsatz kommenden Getriebe die zumindest eine zwischen den Kugelbahnen der Getriebeelemente geführte Kugel entlang einer einzigen wendelförmig verlaufenden Kugelbahn geführt wird, lässt sich mittels des Getriebes schon bei einem geringen Antriebsmoment eine verhältnismäßig hohe Axialkraft erzeugen, wobei das Getriebe einen verhältnismäßig geringen Bauraum aufweist. Da an jedem der Getriebeelemente jeweils nur eine einzige Kugelbahn ausgebildet ist, die zudem - aufgrund des wendelförmigen Verlaufs der Kugelbahn - in der axialen Projektion kreisförmig bzw. teilkreisförmig ist, wird die Fertigung der Getriebeelemente im Vergleich zu der aus DE 10 2011 075 323 A1 bekannten Lösung deutlich vereinfacht. Indem die zumindest eine Kugel entlang einer wendelförmig verlaufenden Kugelbahn geführt wird, besteht bei dem das Getriebe aufweisenden Kugelgelenk ein fester Zusammenhang zwischen dem Drehwinkel (des zweiten Getriebeelements) und dem zurückgelegten axialen Stellweg des ersten Getriebeelements, womit die auf das bewegliche Gehäuseteil wirkende Axialkraft ausgeübt wird. Die ausgeübte Axialkraft lässt sich folglich anhand des Drehwinkels des zweiten Getriebeelements genau einstellen.

Bei dem ersten und zweiten Getriebeelement kann es sich jeweils um unterschiedlich gestaltete Bauteile handeln. Zweckmäßigerweise sind diese jeweils als zumindest bereichsweise scheibenförmige Körper ausgebildet, an deren einer axialen Fläche je eine die Kugelbahn aufnehmende umlaufende schiefe Ebene ausgebildet ist. Zweckmäßigerweise sind jeweils die mit der Kugelbahn versehenen axialen Flächen der beiden Getriebeelemente einander zugewandt. Die wenigstens eine Kugel ist dann zwischen den Kugelbahnen angeordnet und dient somit zur Abstützung der Getriebeelemente aufeinander, wobei die wenigstens eine Kugel bedarfsweise an den beiden Getriebeelementen abrollen kann, um eine Verstellung des Getriebes zu ermöglichen.

Eine vorteilhafte Weiterbildung der Erfindung sieht vor, dass die Anzahl der zwischen den Getriebeelementen geführten Kugeln mindestens drei, vorzugsweise genau drei beträgt. Prinzipiell könnte das bei dem Kugelgelenk zum Einsatz kommende Getriebe mit nur einer einzigen Kugel ausgestattet sein, um seine Grundfunktion zu erfüllen. Hierzu müsste jedoch aufgrund der statisch nicht bestimmten Abstützung der Getriebeelemente aufeinander eine entsprechende Lagerung der Getriebeelemente vorgenommen werden. Wenn gemäß einer besonders bevorzugten Weiterbildung genau drei Kugeln zwischen den Getriebeelementen geführt werden, ergibt sich der Vorteil, dass sich das erste und zweite Getriebeelement statisch bestimmt aufeinander abstützen. Grundsätzlich gilt, dass sich mit steigender Anzahl von Kugeln die Flächenpressung an den beiden Getriebeelementen verringert. Somit können auch mehr als drei Kugeln vorteilhaft zum Einsatz kommen, um die Bauteilbeanspruchung möglichst gering zu halten. In diesem Fall liegt jedoch eine statische Überbestimmtheit der Abstützung der beiden Getriebeelemente vor. Es wird daher die Anzahl von drei Kugeln als besonders bevorzugt angesehen.

Zur Betätigung des bei dem Kugelgelenk zum Einsatz kommenden Getriebes ist zweckmäßigerweise das zweite Getriebeelement, also das um die Rotationsachse drehbar gelagerte Getriebeelement, über ein formschlüssiges Eingriffsmittel von außen rotatorisch antreibbar. In konstruktiver Hinsicht handelt es sich bei dem formschlüssigen Eingriffsmittel bevorzugt um eine an dem zweiten Getriebeelement ausgebildete Verzahnung. Diese Verzahnung kann vorteilhaft mit der Abtriebswelle eines Elektromotors oder einer Motor-Getriebe-Einheit beispielsweise bringbar sein. Die Verzahnung kann dabei beispielsweise als Schneckenrad eines sogenannten Schneckengetriebes dienen, wobei an der Abtriebswelle des Elektromotors eine schraubenförmige Schnecke ausgebildet ist, die mit dem Schneckenrad in Eingriff steht, um dieses anzutreiben. Vorteilhaft an einem Schneckengetriebe zum Antrieb des zweiten Getriebeelements ist die Selbsthemmungswirkung.

Grundsätzlich ist es denkbar, dass die wenigstens eine Kugel ausschließlich durch die jeweils angrenzenden Kugelbahnen jedes der beiden Getriebeelemente geführt wird. Insbesondere wenn wie bevorzugt mehrere, insbesondere drei Kugeln zum Einsatz kommen, ist es vorteilhaft, dass zwischen den Getriebeelementen ein zur Führung der wenigstens einen Kugel entlang der Kugelbahn dienender Kugelkäfig angeordnet ist. Der Kugelkäfig übernimmt dabei die Funktion, die mehreren Kugeln in einem definierten Abstand voneinander zu halten und kann daneben dazu dienen, einen Verlust der Kugeln zu verhindern. Der Kugelkäfig kann beispielsweise aus Metall, aus Kunststoff oder einem faserverstärktem Kunststoff gefertigt sein.

Bei dem Kugelkäfig handelt es sich bevorzugt um ein im Wesentlichen scheibenförmiges Bauteil, das vorzugsweise so angeordnet ist, dass dessen Mittelachse mit der Rotationsachse des Kugelgelenks zusammenfällt. Bei einer Betätigung des Getriebes dreht sich das zweite Getriebeelement um die Rotationsachse. Dies hat zur Folge, dass sich die wenigstens eine Kugel sowie der diese führende Kugelkäfig mit gleichem Drehsinn wie das zweite Getriebeelement um die Rotationsachse drehen.

Zur Erzielung einer kompakten Bauform, sowie zur sicheren Führung der zumindest einen Kugel, weist der Kugelkäfig an dessen Axialflächen vorzugsweise eine Außenkontur auf, die im Wesentlichen komplementär zu einer jeweils gegenüberliegenden Außenkontur des benachbarten Getriebeelements ausgebildet ist.

Zweckmäßigerweise sind an dem Kugelkäfig mehrere, der Anzahl der Kugeln entsprechende Ausnehmungen zur zumindest teilweisen Aufnahme jeweils einer Kugel vorgesehen.

Eine besonders sichere Führung der wenigstens einen zwischen den beiden Getriebeelementen geführten Kugel lässt sich erzielen, wenn das erste und zweite Getriebeelement, vorzugsweise auch der Kugelkäfig, im Einbauzustand formschlüssig derart miteinander verbunden sind, dass der Formschluss eine translatorische Bewegung dieser Bauteile in einer zur Rotationsachse senkrechten Ebene verhindert, die Bauteile jedoch um die Rotationsachse gegeneinander verdrehbar sind. Die genannte Wirkung lässt sich konstruktiv auf besonders vorteilhafte Weise dadurch erzielen, dass am ersten Getriebeelement ein zylindrischer Abschnitt ausgebildet ist, der eine zylindrische Durchgangsöffnung im Kugelkäfig durchdringt und in eine zylindrische Ausnehmung am zweiten Getriebeelement eintaucht. Durch die beschriebene Gestaltung ist gewährleistet, dass sich das erste und zweite Getriebeelement und der Kugelkäfig in der zur Rotationsachse senkrechten Ebene nicht gegeneinander verschieben können, jedoch um die Rotationsachse gegeneinander verdrehbar sind, um die Funktion des Getriebes ausführen zu können.

Zur Vorgabe einer Ausgangsstellung des Getriebes ist gemäß einer vorteilhaften Weiterbildung der Erfindung am ersten und am zweiten Getriebeelement jeweils ein Anschlag ausgebildet, der mit je einem am Kugelkäfig ausgebildeten Anschlag korrespondiert. Durch Bereitstellung eines Anschlags lässt sich das Getriebe durch entsprechendes Anfahren des Anschlags stets in eine bekannte Ausgangsposition bringen, die im vorhergehenden Betrieb aufgrund von an den Kugeln auftretendem Schlupf verlassen worden sein kann.

Erfindungsgemäß ist das erste Getriebeelement axial verschiebbar gelagert. Eine solche axial verschiebbare Lagerung kann auf verschiedene Weisen verwirklicht werden, wobei dem ersten Getriebeelement zu diesem Zweck vorteilhaft eine Verdrehsicherung zugeordnet ist, die bei Gewährleistung der axialen Verschiebbarkeit ein Verdrehen des ersten Getriebeelements um die Rotationsachse verhindert.

Zur Gewährleistung eines sicheren Betriebes sollte jederzeit gewährleistet sein, dass die wenigstens eine Kugel sich zwischen den Kugelbahnen der beiden Getriebeelemente befindet. Vorteilhaft ist daher dem Getriebe eine Federeinheit zugeordnet, mit der die beiden Getriebeelemente axial gegeneinander vorspannbar sind. Eine durch die Federeinheit aufgebrachte Vorspannkraft kann auf diese Weise wirksam verhindern, dass die wenigstens eine Kugel ihre durch die beiden Kugelbahnen vorgegebene Führungsbahn verlässt.

Damit sich an dem Kugelgelenk der Reibwiderstand möglichst genau einstellen lässt, zeichnet sich das Kugelgelenk auf vorteilhafte Weise aus durch eine Einrichtung, mit welcher sich ein eingestellter Drehwinkel des zweiten Getriebeelements einer auf das bewegliche Gehäuseteil ausgeübten Axialkraft zuordnen und abspeichern lässt. Die Einrichtung ist vorzugsweise betreibbar, auf Basis des abgespeicherten Zusammenhangs zwischen Drehwinkel und Axialkraft einen zur Einstellung einer gewünschten Axialkraft nötigen Drehwinkel des zweiten Getriebeelements vorzugeben.

Die Erfindung betrifft weiterhin ein Getriebe gemäß dem Anspruch 16 für ein wie zuvor beschriebenes Kugelgelenk. Das Getriebe weist ein erstes und ein zweites Getriebeelement auf, an denen jeweils eine, bezogen auf eine Rotationsachse einzige wendelförmig verlaufende Kugelbahn ausgebildet ist, wobei sich das erste und das zweite Getriebeelement in Axialrichtung über wenigstens eine zwischen den Kugelbahnen der Getriebeelemente geführte Kugel aufeinander abstützen und wobei das erste Getriebeelement axial verschiebbar gelagert ist, während das zweite Getriebeelement um die Rotationsachse drehbar gelagert ist, so dass sich durch Drehung des zweiten Getriebeelements das erste Getriebeelement axial verschieben lässt.

Die Erfindung wird nachfolgend anhand eines Ausführungsbeispiels sowie einer Modifikation davon näher erläutert und beschrieben. Aus dem dargestellten Ausführungsbeispiel sowie der Modifikation ergeben sich auch weitere vorteilhafte Effekte der Erfindung. In den nachfolgenden Figuren zeigt:
- Figur 1: ein Ausführungsbeispiel eines Kugelgelenks im seitlichen Schnitt in schematischer Darstellung,
- Figur 2: ein Getriebe, das bei dem in Figur 1 gezeigten Kugelgelenk vorteilhaft zum Einsatz kommen kann, in perspektivischer Ansicht,
- Figur 3: das Getriebe aus Figur 2 in Explosionsdarstellung,
- Figur 4: ein erstes Getriebeelement (untere Kugelrampe) des Getriebes aus Figur 2 mit drei darauf befindlichen Kugeln in perspektivischer Ansicht,
- Figur 5: das erste Getriebeelement (untere Kugelrampe) aus Figur 4 mit darauf angeordneten Kugeln in Draufsicht,
- Figur 6: einen Kugelkäfig des in Figur 2 gezeigten Getriebes in Draufsicht,
- Figur 7: einen modifizierten Kugelkäfig in Draufsicht,
- Figur 8: das Getriebe gemäß Figur 2 in perspektivischer Ansicht von schräg unten.

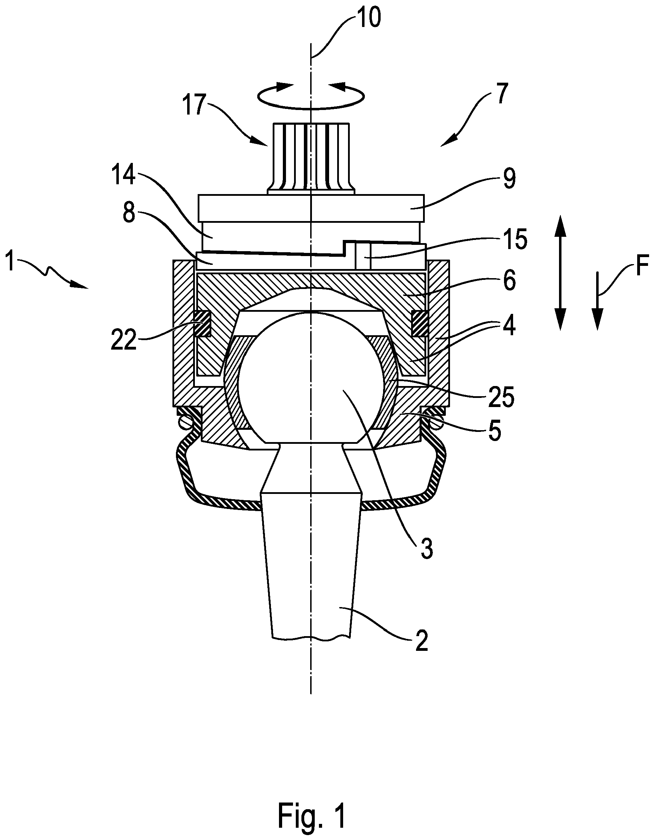

Figur 1 zeigt ein Kugelgelenk 1 mit veränderlichem Reibwiderstand gemäß einem Ausführungsbeispiel der vorliegenden Erfindung in schematischer Schnittdarstellung. Das Kugelgelenk 1 kann in unterschiedlichen Anwendungen zum Einsatz kommen, vorzugsweise dient dieses der gelenkigen Verbindung zweier Bauteile eines Fahrzeugs, insbesondere zweier Bauteile dessen Fahrwerks. Das Kugelgelenk 1 weist einen Kugelzapfen 2 auf, der mit einer Gelenkkugel 3 versehen ist. Die Gelenkkugel 3 des Kugelzapfens 2 wird von einem Gelenkgehäuse 4 aufgenommen, um diesem gegenüber gelenkig gelagert zu sein. Somit ist der Kugelzapfen 2 gegenüber dem Gelenkgehäuse 4 dreh- und schwenkbeweglich.

Das Gelenkgehäuse 4 umfasst dabei zwei relativ zueinander bewegbare Gehäuseteile 5, 6, die an gegenüberliegenden Seiten der Gelenkkugel 3 angreifen. Das Gehäuseteil 5 bildet dabei ein ruhendes Gehäuseteil und stützt die Gelenkkugel 3 an der dem Zapfenhals zugewandten Seite ab, während es sich bei dem Gehäuseteil 6 um ein bewegliches Gehäuseteil handelt, das kolbenähnlich innerhalb des als Zylinder fungierenden ruhenden Gehäuseteils 5 angeordnet ist und in Richtung einer Achse 10 verschiebbar ist, welche mit der Gelenkachse sowie einer noch zu erläuternden Rotationsachse zusammenfällt. Durch Verschiebung des beweglichen Gehäuseteils 6 in Richtung der Achse 10 entsprechend dem eingezeichneten Doppelpfeil rechts neben dem Kugelgelenk 1 lässt sich ein zwischen ruhendem Gehäuseteil 5 und beweglichem Gehäuseteil 6 gebildeter Zwischenraum vergrößern oder verkleinern, um auf diese Weise die in dem Zwischenraum befindliche Gelenkkugel 3 mit veränderlichem Druck zwischen diesen beiden Gehäuseteilen 5, 6 zu klemmen und somit den Reibwiderstand des Kugelgelenks 1 zu beeinflussen. Im gezeigten Ausführungsbeispiel steht die Gelenkkugel 3 des Kugelzapfens 2 nicht unmittelbar, sondern über eine gemeinsame aus einem verformbaren Material hergestellte Lagerschale 25 mit den Gehäuseteilen 5, 6 in Kontakt.

Zur Verhinderung des Eindringens von Schmutz oder Feuchtigkeit in den inneren Gelenkbereich sind die Gehäuseteile 5, 6 durch eine umlaufende Dichtung 22 gegeneinander abgedichtet. Wie für sich gesehen bekannt und daher nicht näher bezeichnet, ist das Kugelgelenk 1 an dessen Gehäuseöffnung - dem Kugelzapfen 2 zugewandte Öffnung des Gelenkgehäuses 4 - mittels eines Dichtungsbalges gegenüber der äußeren Umgebung abgedichtet, wobei ein Ende des Dichtungsbalges am Gelenkgehäuse 4 befestigt ist, während ein gegenüberliegendes Ende des Dichtungsbalges am Kugelzapfen 2 befestigt ist.

Oberhalb des beweglichen Gehäuseteils 6, im gezeigten Ausführungsbeispiel unmittelbar an dieses angrenzend, ist ein Getriebe 7 angeordnet, das eine Rotationsachse 10 aufweist, welche mit der Gelenkachse des Kugelgelenks 1 zusammenfällt. Das Getriebe 7, dessen Aufbau und Funktion im Rahmen der nachfolgenden Figuren näher erläutert wird, dient dazu, das bewegliche Gehäuseteil 6 in axialer Richtung, d. h. in Richtung der Rotationsachse 10, bewegen zu können, um auf diese Weise einen veränderlichen Druck auf die Gelenkkugel 3 ausüben zu können. Insbesondere lässt sich mittels des Getriebes 7 eine Axialkraft F (in Figur 1 durch den Pfeil angedeutet) auf das bewegliche Gehäuseteil 6 ausüben. Der Aufbau des Getriebes 7 wird nachfolgend näher erläutert.

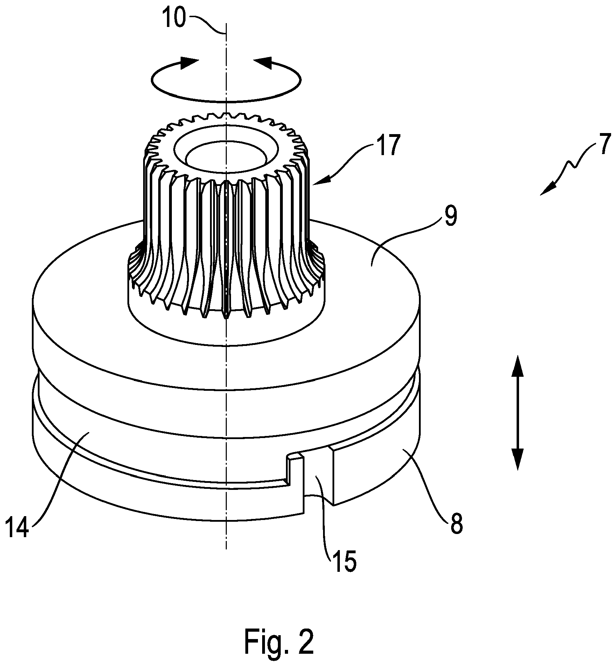

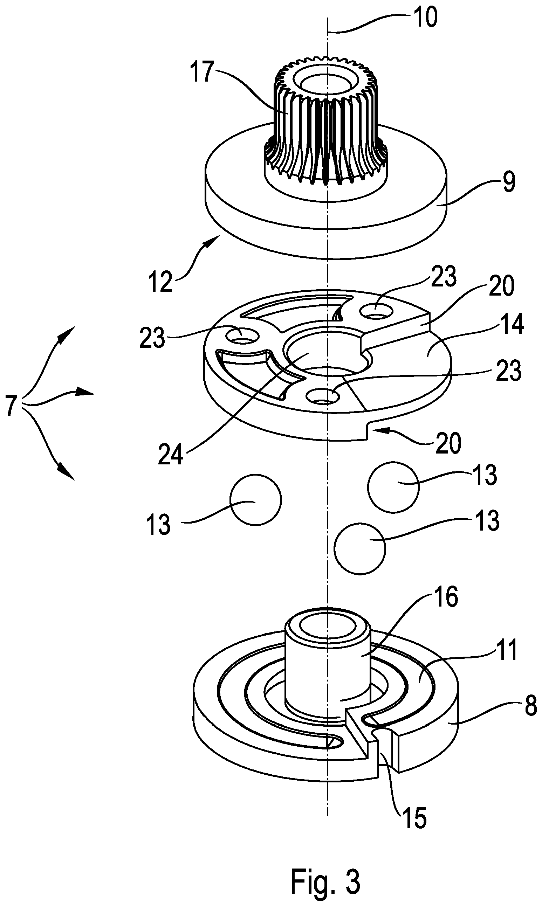

Figur 2 zeigt ein Getriebe 7, das bei einem wie in Figur 1 gezeigten Kugelgelenk 1 zum Einsatz kommen kann. Das Getriebe 7, welches in Figur 2 in perspektivischer Ansicht im zusammengebauten Zustand gezeigt wird, ist zudem in den Figuren 3 bis 6 sowie der Figur 8 vollständig bzw. anhand einzelner Komponenten dargestellt, so dass sich die nachfolgende Erläuterung auf sämtliche der zuvor genannten Figuren bezieht, wobei sich gleiche Bezugszeichen auf gleiche Bauteile beziehen und zur Vermeidung von Wiederholungen eine einzige Beschreibung des in den Figuren dargestellten Ausführungsbeispiels vorgenommen wird.

Das in Figur 2 gezeigte Getriebe 7 weist ein erstes Getriebeelement 8 und ein zweites Getriebeelement 9 auf. Zwischen dem ersten Getriebeelement 8 und dem zweiten Getriebeelement 9 ist ein Kugelkäfig 14 angeordnet. Das zweite Getriebeelement 9 weist einen kreisscheibenförmigen Bereich mit großem Durchmesser und einen daran angrenzenden Bereich mit dazu kleinem Durchmesser auf, an dem eine Antriebsverzahnung 17 ausgebildet ist. Die Antriebsverzahnung 17 bildet das Schneckenrad eines - nur teilweise dargestellten - Schneckengetriebes. Insbesondere kann zweite Getriebeelement 9 somit mittels der Antriebsverzahnung 17 über eine Schnecke angetrieben werden, die beispielsweise an einer Motorwelle angeordnet ist.

Der Kugelkäfig 14 und das erste Getriebeelement 8 sind in dem in Fig. 2 sichtbaren Bereich äußerlich im Wesentlichen scheibenförmig ausgebildet. Erstes Getriebeelement 8, zweites Getriebeelement 9 und Kugelkäfig 14 sind koaxial auf einer Rotationsachse 10 angeordnet und gegeneinander um diese Rotationsachse 10 verdrehbar. Abhängig vom relativen Drehwinkel, den das zweite Getriebeelement 9 gegenüber dem ersten Getriebeelement 8 einnimmt, verändert sich der axiale Abstand zwischen dem ersten Getriebeelement 8 und dem zweiten Getriebeelement 9, wie durch den rechts des Getriebes 7 angegebenen Doppelpfeil angedeutet.

Figur 3 zeigt eine Explosionsdarstellung des Getriebes 7 entlang der Rotationsachse 10. Aus der Darstellung geht hervor, dass das erste Getriebeelement 8 einen kreisscheibenförmigen Bereich mit großem Durchmesser sowie einen zylindrischen Abschnitt 16 mit dazu kleinem Durchmesser aufweist. Das erste Getriebeelement 8 ist einteilig aus Metall hergestellt. Während das erste Getriebeelement 8 an der Unterseite (dem beweglichen Gehäuseteil 6 gemäß Figur 1 zugewandte Seite) einen ebenen Verlauf aufweist, ist an der dem zweiten Getriebeelement 9 zugewandten Seite des ersten Getriebeelements 8 eine umlaufende schiefe Ebene ausgebildet. In diese schiefe Ebene ist eine Kugelbahn 11 eingearbeitet, die bezogen auf die Rotationsachse 10 einen wendelförmigen Verlauf aufweist. Die Kugelbahn 11 steigt von einem Anfangspunkt mit geringem axialem Abstand (zur unteren axialen Fläche) auf einen Endpunkt mit hohem axialem Abstand an. Im Bereich des Endpunktes der Kugelbahn 11 ist am ersten Getriebeelement 8 in einem Umfangsbereich eine sich in Axialrichtung erstreckende Nut ausgebildet, die als Verdrehsicherung 15 dient. Mittels der Verdrehsicherung 15 kann gewährleistet werden, dass das erste Getriebeelement 8 in Richtung der Rotationsachse 10 zwar axial bewegbar, jedoch um die Rotationsachse 10 nicht drehbar ist. Das erste Getriebeelement 8 kann somit auch als verschiebbare Kugelrampe bezeichnet werden.

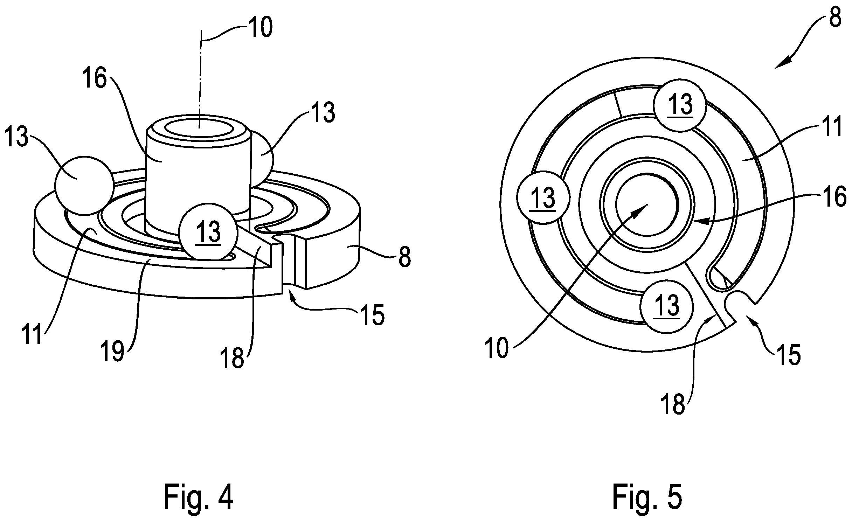

Wie in den Figuren 4 und 5 dargestellt, dient die an dem ersten Getriebeelement 8 ausgebildete Kugelbahn 11 dazu, drei Kugeln 13 aufzunehmen, wobei diese drei Kugeln 13 zumindest abschnittsweise über die Kugelbahn 11 abrollen können. Insbesondere Figur 5 lässt sich entnehmen, dass die Kugelbahn 11 in deren axialer Projektion einen teilkreisförmigen Verlauf aufweist, d. h. der Abstand der Kugelbahn 11 zur Rotationsachse 10 ist konstant.

Aus Figur 3 lässt sich entnehmen, dass die drei auf der Kugelbahn 11 geführten Kugeln 13 mittels eines Kugelkäfigs 14 in einem bestimmten Abstand zueinander gehalten werden. Es handelt sich bei dem Kugelkäfig 14 um ein im Wesentlichen scheibenförmiges Bauteil aus faserverstärktem Kunststoff, das in der Mitte einen zentralen Durchgang 24 aufweist, der im Montagezustand des Getriebes 7 von dem an dem ersten Getriebeelement 8 ausgebildeten zylindrischen Abschnitt 16 durchdrungen wird. In dem Kugelkäfig 14 sind weiterhin für jede der drei Kugeln 13 runde Ausnehmungen 23 ausgebildet, welche jeweils eine Kugel 13 zumindest teilweise aufnehmen. Jede der Kugeln 13 wird dabei an einem Umfangsabschnitt in der zugehörigen Ausnehmung 23 geführt.

Abweichend von einer reinen Kreisscheibenform weist der Kugelkäfig 14 an dessen beiden Axialflächen eine Außenkontur auf, die im Wesentlichen komplementär zu einer jeweils gegenüberliegenden Außenkontur des benachbarten Getriebeelements 8, 9 ausgebildet ist. Mit anderen Worten ist an beiden Axialflächen des Kugelkäfigs 14 jeweils eine umlaufende schiefe Ebene ausgebildet, deren Verlauf mit der schiefen Ebene des jeweils gegenüberliegenden Getriebeelements 8, 9 korrespondiert. Es sei darauf hingewiesen, dass sich eine am zweiten Getriebeelement 9 ausgebildete schiefe Ebene sowie eine daran ausgebildete Kugelbahn 12 aus der Darstellung gemäß Figur 3 nicht unmittelbar entnehmen lässt. Daher sei erwähnt, dass an der Unterseite des zweiten Getriebeelements 9 eine zu der Kugelbahn 11 des ersten Getriebeelements 8 komplementäre Kugelbahn 12 an einer entsprechend umlaufenden schiefen Ebene ausgebildet ist.

Sowohl am ersten Getriebeelement 8 als auch am zweiten Getriebeelement 9 ist jeweils ein Anschlag 18 ausgebildet (aus der Zeichnung gemäß Fig. 4 lässt sich nur der Anschlag 18 des ersten Getriebeelements 8 entnehmen), der zur Vorgabe einer Ausgangsstellung des Getriebes 7 mit je einem am Kugelkäfig 14 ausgebildeten Anschlag 20 korrespondiert. Die Anschläge 18 bzw. 20 an den Getriebeelementen 8, 9 bzw. dem Kugelkäfig 14 überbrücken jeweils den axialen Versatz zwischen Anfangs- und Endbereich der jeweils an den Bauteilen ausgebildeten schiefen Ebene.

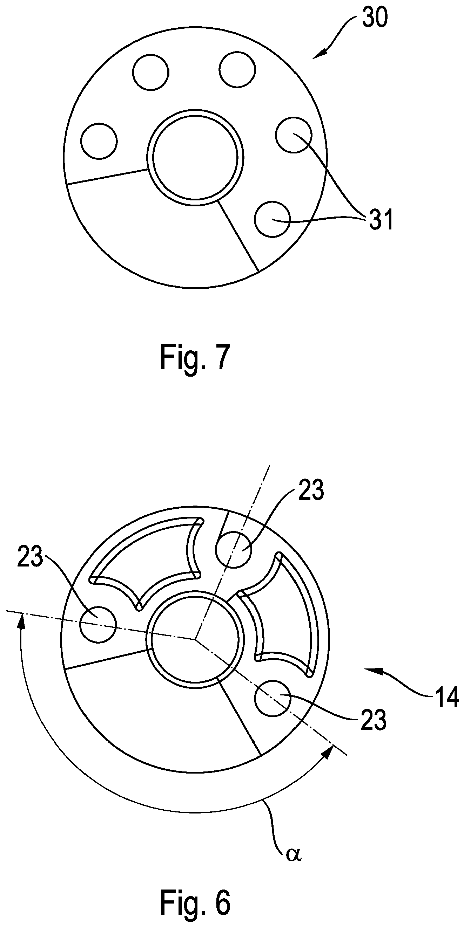

Gemäß der Darstellung in Figur 6 sind die Kugelführungslöcher 23 nicht gleichmäßig (also nicht im Winkel von 120 Grad) über den Umfang verteilt, sondern so angeordnet, dass sich zwischen einer bezogen auf den Verlauf der Kugelbahn ersten Kugel und letzten Kugel ein über 120 Grad liegender Winkel α ergibt, womit das Getriebe 7 insgesamt einen hohen maximal erzielbaren Drehwinkel von etwa 230 Grad zwischen erstem Getriebeteil 8 und zweitem Getriebeteil 9 aufweist. Aus dem hohen Drehwinkel ergibt sich ein hoher erzielbarer axialer Hub des Getriebes 7 ("Getriebehub").

Gemäß einer in Figur 7 dargestellten modifizierten Ausführung eines Kugelkäfigs 30 kann dieser alternativ mit fünf Kugelführungslöchern 31 versehen sein, wodurch sich ein Getriebe der zuvor beschriebenen Art auch mit fünf Kugeln betreiben ließe. Ein solches Getriebe wäre zwar hinsichtlich der Abstützung des zweiten Getriebeteils gegenüber dem ersten Getriebeteil statisch überbestimmt, jedoch reduziert sich durch die erhöhte Anzahl von Kugeln die Flächenpressung an den Kugelbahnen und somit die jeweilige Bauteilbeanspruchung.

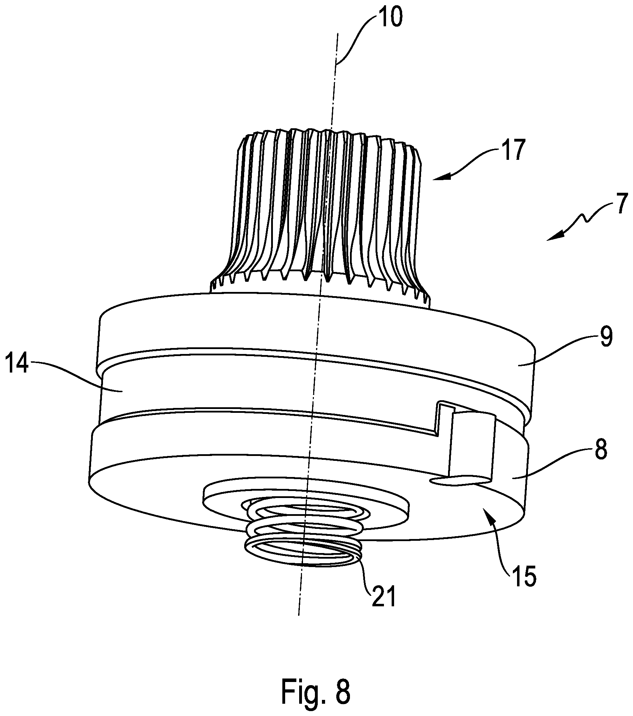

Schließlich zeigt Figur 8 das zuvor anhand der Figuren 2 bis 6 erläuterte Getriebe 7 in einer perspektivischen Ansicht von schräg unten. Insbesondere lässt sich der Darstellung entnehmen, dass die am Umfangsbereich des ersten Getriebeelements 8 ausgebildete in Axialrichtung verlaufende Nut hier von einem Zapfen ausgefüllt ist, der im Sinne einer Verdrehsicherung 15 wirkt. Bei entsprechender Aufnahme des Getriebes 7 in eine geeignet gestaltete Gehäuseanordnung lässt sich das erste Getriebeelement 8 demnach axial beweglich führen, wobei ein Verdrehen um die Rotationsachse 10 verhindert wird.

An der Unterseite des ersten Getriebeelements 8, d. h. der dem beweglichen Gehäuseteil 6 zugewandten Seite des ersten Getriebeelements 8, ist weiterhin ein Federelement 21 vorgesehen. Dieses ist in Form einer Schraubenfeder ausgebildet, die sich im Montagezustand des Kugelgelenks 1 am beweglichen Gehäuseteil 6 (vgl. Fig. 1) abstützt und dafür sorgt, dass das erste Getriebeelement 8 gegen das zweite Getriebeelement 9 vorgespannt ist. Damit wird ein Verlust und/oder Schlupf der Kugeln - beispielsweise aufgrund von Kontaktverlust - wirksam verhindert.

Hinsichtlich der Funktionsweise liegt somit ein Getriebe 7 vor, das ein erstes Getriebeelement 8 in Form einer verschiebbaren Kugelrampe sowie ein zweites Getriebeelement 9 im Sinne einer drehbaren Kugelrampe aufweist, an denen jeweils eine bezogen auf die Rotationsachse 10 wendelförmig verlaufende Kugelbahn 11, 12 ausgebildet ist. Das erste Getriebeelement 8 und das zweite Getriebeelement 9 stützen sich in Axialrichtung 10 über die drei Kugeln 13 aufeinander ab, die zwischen den an den Getriebeelementen 8, 9 ausgebildeten, einander zugewandten Kugelbahnen 11, 12 geführt werden und daran abrollen können. Das erste Getriebeelement 8 ist in Axialrichtung 10 axial verschiebbar gelagert, während das zweite Getriebeelement 9 um die Rotationsachse 10 drehbar gelagert ist. Durch Zusammenwirkung der wendelförmig verlaufenden Kugelbahnen mit den dazwischen angeordneten drei Kugeln ergibt sich, dass durch Drehung des zweiten Getriebeelements um die Rotationsachse das erste Getriebeelement axial verschoben wird. Das Getriebe 7 wandelt somit eine am zweiten Getriebeelement 9 (antriebsseitig) eingeleitete Rotationsbewegung mit hohem Wirkungsgrad in eine translatorische Bewegung des ersten Getriebeelements 8 (abtriebsseitig) in Axialrichtung. Indem das Getriebe 7 mit dem beweglichen Gehäuseteil 6 in mechanischen Druckkontakt bringbar ist, lässt sich durch Verstellung des Getriebes 7 auf das bewegliche Gehäuseteil 6 eine Axialkraft F ausüben, womit sich im Ergebnis ein vom Drehwinkel des zweiten Getriebeelements 9 abhängiger Druck auf die Gelenkkugel 3 und somit ein veränderlicher Reibwiderstand des Kugelgelenks 1 einstellen lässt.

### Bezugszeichen

- 1: Kugelgelenk
- 2: Kugelzapfen
- 3: Gelenkkugel
- 4: Gelenkgehäuse
- 5: ruhendes Gehäuseteil
- 6: bewegliches Gehäuseteil
- 7: Getriebe
- 8: erstes Getriebeelement (verschiebbare Kugelrampe)
- 9: zweites Getriebeelement (drehbare Kugelrampe)
- 10: Rotationsachse, Gelenkachse
- 11: Kugelbahn
- 12: Kugelbahn
- 13: Getriebekugel
- 14: Kugelkäfig
- 15: Verdrehsicherung
- 16: zylindrischer Körper
- 17: Antriebsverzahnung
- 18: Anschlag
- 19: umlaufende schiefe Ebene
- 20: Anschlag
- 21: Federelement
- 22: Dichtung
- 23: Kugelführungsloch
- 24: zentraler Durchgang
- 25: Lagerschale
- 30: Kugelkäfig
- 31: Kugelführungsloch
- α: Winkel
- F: Axialkraft

## Patentansprüche

1. Kugelgelenk (1) mit veränderlichem Reibwiderstand, insbesondere für ein Fahrzeug, aufweisend:
einen Kugelzapfen (2) mit einer Gelenkkugel (3), die in einem Gelenkgehäuse (4) aufgenommen ist, um diesem gegenüber gelenkig gelagert zu sein, wobei das Gelenkgehäuse (4) zwei relativ zueinander bewegbare Gehäuseteile (5, 6) umfasst, die an gegenüberliegenden Seiten der Gelenkkugel (3) angreifen, und
ein Getriebe (7), mit dem sich zumindest eines der Gehäuseteile (6) bewegen lässt, um einen veränderlichen Druck auf die Gelenkkugel (3) auszuüben,
wobei das Getriebe (7) ein erstes und ein zweites Getriebeelement (8, 9) aufweist,
**dadurch gekennzeichnet, dass** an dem ersten und dem zweiten Getriebeelement (8, 9) jeweils eine bezogen auf eine Rotationsachse (10) einzige wendelförmig verlaufende Kugelbahn (11, 12) ausgebildet ist,
wobei sich das erste und das zweite Getriebeelement (8, 9) in Axialrichtung (10) über wenigstens eine zwischen den Kugelbahnen (11, 12) der Getriebeelemente (8, 9) geführte Kugel (13) aufeinander abstützen und
wobei das erste Getriebeelement (8) axial verschiebbar gelagert und mit dem beweglichen Gehäuseteil (6) in Druckkontakt bringbar ist, während das zweite Getriebeelement (9) um die Rotationsachse (10) drehbar gelagert ist, so dass sich durch Drehung des zweiten Getriebeelements (9) das erste Getriebeelement (8) axial verschieben lässt, um auf das bewegliche Gehäuseteil (6) eine Axialkraft (F) auszuüben.

2. Kugelgelenk nach Anspruch 1, **dadurch gekennzeichnet, dass** das erste und zweite Getriebeelement (8,9) jeweils als zumindest bereichsweise scheibenförmige Körper ausgebildet sind, an deren einer axialen Fläche je eine die Kugelbahn (11, 12) aufnehmende umlaufende schiefe Ebene ausgebildet ist.

3. Kugelgelenk nach Anspruch 1 oder 2, **dadurch gekennzeichnet, dass** die Anzahl der zwischen den Getriebeelementen (8, 9) geführten Kugeln (13) mindestens drei, vorzugsweise genau drei beträgt.

4. Kugelgelenk nach einem der vorigen Ansprüche, **dadurch gekennzeichnet, dass** das zweite Getriebeelement (9) über ein formschlüssiges Eingriffsmittel (17), insbesondere eine daran ausgebildete Verzahnung, von außen rotatorisch antreibbar ist.

5. Kugelgelenk nach einem der vorigen Ansprüche, **dadurch gekennzeichnet, dass** zwischen den Getriebeelementen (8, 9) ein zur Führung der wenigstens einen Kugel (13) entlang der Kugelbahn (11, 12) dienender Kugelkäfig (14) angeordnet ist.

6. Kugelgelenk nach Anspruch 5, **dadurch gekennzeichnet, dass** es sich bei dem Kugelkäfig (14) um ein im Wesentlichen scheibenförmiges Bauteil handelt.

7. Kugelgelenk nach Anspruch 5 oder 6, **dadurch gekennzeichnet, dass** der Kugelkäfig (14) an dessen Axialflächen eine Außenkontur aufweist, die im Wesentlichen komplementär zu einer jeweils gegenüberliegenden Außenkontur des benachbarten Getriebeelements (8, 9) ausgebildet ist.

8. Kugelgelenk nach einem der Ansprüche 5 bis 7, **dadurch gekennzeichnet, dass** an dem Kugelkäfig (14) mehrere, der Anzahl der Kugeln (13) entsprechende Ausnehmungen (23) zur zumindest teilweisen Aufnahme einer Kugel (13) vorgesehen sind.

9. Kugelgelenk nach einem der vorigen Ansprüche, **dadurch gekennzeichnet, dass** das erste und zweite Getriebeelement (8, 9), vorzugsweise auch der Kugelkäfig (14), im Einbauzustand formschlüssig derart miteinander verbunden sind, dass der Formschluss eine translatorische Bewegung dieser Bauteile (8, 9, 14) in einer zur Rotationsachse (10) senkrechten Ebene verhindert, die Bauteile (8, 9, 14) jedoch um die Rotationsachse (10) gegeneinander verdrehbar sind.

10. Kugelgelenk nach einem der vorigen Ansprüche, **dadurch gekennzeichnet, dass** am ersten Getriebeelement (8) ein zylindrischer Abschnitt (16) ausgebildet ist, der eine zylindrische Durchgangsöffnung (24) im Kugelkäfig (14) durchdringt und in eine zylindrische Ausnehmung am zweiten Getriebeelement (9) eintaucht.

11. Kugelgelenk nach einem der vorigen Ansprüche, **dadurch gekennzeichnet, dass** am ersten und zweiten Getriebeelement (8, 9) jeweils ein Anschlag (18) ausgebildet ist, der zur Vorgabe einer Ausgangsstellung des Getriebes (7) mit je einem am Kugelkäfig (14) ausgebildeten Anschlag (20) korrespondiert.

12. Kugelgelenk nach einem der vorigen Ansprüche, **dadurch gekennzeichnet, dass** dem ersten Getriebeelement (8) eine Verdrehsicherung (15) zugeordnet ist, die bei Gewährleitung der axialen Verschiebbarkeit ein Verdrehen des ersten Getriebeelements (8) um die Rotationsachse (10) verhindert.

13. Kugelgelenk nach einem der vorigen Ansprüche, **dadurch gekennzeichnet, dass** dem Getriebe (7) eine Federeinheit (21) zugeordnet ist, mit der die beiden Getriebeelemente (8, 9) axial gegeneinander vorspannbar sind.

14. Kugelgelenk nach einem der vorigen Ansprüche, **gekennzeichnet durch** eine Einrichtung, mit welcher sich ein eingestellter Drehwinkel des zweiten Getriebeelements (9) einer auf das bewegliche Gehäuseteil (6) ausgeübten Axialkraft zuordnen und abspeichern lässt.

15. Kugelgelenk nach Anspruch 14, **dadurch gekennzeichnet, dass** die Einrichtung betreibbar ist, auf Basis des abgespeicherten Zusammenhangs zwischen Drehwinkel und Axialkraft einen zur Einstellung einer gewünschten Axialkraft nötigen Drehwinkel des zweiten Getriebeelements (9) vorzugeben.

16. Getriebe (7) für ein Kugelgelenk (1) gemäß einem der vorigen Ansprüche, aufweisend ein erstes und ein zweites Getriebeelement (8, 9), an denen jeweils eine bezogen auf eine Rotationsachse (10) einzige wendelförmig verlaufende Kugelbahn (11, 12) ausgebildet ist, wobei sich das erste und das zweite Getriebeelement (8, 9) in Axialrichtung (10) über wenigstens eine zwischen den Kugelbahnen (11, 12) der Getriebeelemente (8, 9) geführte Kugel (13) aufeinander abstützen und wobei das erste Getriebeelement (8) axial verschiebbar gelagert ist, während das zweite Getriebeelement (9) um die Rotationsachse (10) drehbar gelagert ist, so dass sich durch Drehung des zweiten Getriebeelements (9) das erste Getriebeelement (8) axial verschieben lässt.

## Claims

1. Ball joint (1) having a variable frictional resistance, in particular for a vehicle, having:
a ball pivot (2) with a joint ball (3) which is received in a joint housing (4), in order to be mounted in an articulated manner with respect to the said joint housing (4), the joint housing (4) comprising two housing parts (5, 6) which can be moved relative to one another and act on opposite sides of the joint ball (3), and
a mechanism (7), by way of which at least one of the housing parts (6) can be moved, in order to exert a variable pressure on the joint ball (3),
the mechanism (7) having a first and a second mechanism element (8, 9),
**characterized in that** a single ball track (11, 12) which runs helically in relation to a rotational axis (10) is configured in each case on the first and the second mechanism element (8, 9),
the first and the second mechanism element (8, 9) being supported on one another in the axial direction (10) via at least one ball (13) which is guided between the ball tracks (11, 12) of the mechanism elements (8, 9), and
the first mechanism element (8) being mounted in an axially displaceable manner, and it being possible foe the said first mechanism element (8) to be brought into pressure contact with the movable housing part (6), whereas the second mechanism element (9) is mounted such that it can be rotated about the rotational axis (10), with the result that the first mechanism element (8) can be displaced axially by way of rotation of the second mechanism element (9), in order to exert an axial force (F) on the movable housing part (6).

2. Ball joint according to Claim 1, **characterized in that** the first and second mechanism element (8, 9) are configured in each case as a body which is disc-shaped at least in regions and on the one axial face of which in each case one circumferential oblique plane which receives the ball track (11, 12) is configured.

3. Ball joint according to Claim 1 or 2, **characterized in that** the number of balls (13) which are guided between the mechanism elements (8, 9) is at least three, preferably precisely three.

4. Ball joint according to one of the preceding claims, **characterized in that** the second mechanism element (9) can be driven rotationally from the outside via a positively locking engagement means (17), in particular a toothing system which is configured on the said second mechanism element (9).

5. Ball joint according to one of the preceding claims, **characterized in that** a ball cage (14) which serves to guide the at least one ball (13) along the ball track (11, 12) is arranged between the mechanism elements (8, 9).

6. Ball joint according to Claim 5, **characterized in that** the ball cage (14) is a substantially disc-shaped component.

7. Ball joint according to Claim 5 or 6, **characterized in that**, on its axial faces, the ball cage (14) has an outer contour which is of substantially complementary configuration with respect to a respective opposite outer contour of the adjoining mechanism element (8, 9).

8. Ball joint according to one of Claims 5 to 7, **characterized in that** a plurality of recesses (23) which correspond to the number of balls (13) are provided on the ball cage (14) for at least partially receiving a ball (13).

9. Ball joint according to one of the preceding claims, **characterized in that** the first and second mechanism element (8, 9), preferably also the ball cage (14), are connected to one another in a positively locking manner in the installed state in such a way that the positively locking connection prevents a translational movement of the said components (8, 9, 14) in a plane which is perpendicular with respect to the rotational axis (10), but the components (8, 9, 14) can be rotated with respect to one another about the rotational axis (10).

10. Ball joint according to one of the preceding claims, **characterized in that** a cylindrical section (16) is configured on the first mechanism element (8), which cylindrical section (16) penetrates a cylindrical through opening (24) in the ball cage (14) and dips into a cylindrical recess on the second mechanism element (9).

11. Ball joint according to one of the preceding claims, **characterized in that** in each case one stop (18) is configured on the first and second mechanism element (8, 9), which stop (18) corresponds with in each case one stop (20) which is configured on the ball cage (14) in order to specify a starting position of the mechanism (7).

12. Ball joint according to one of the preceding claims, **characterized in that** the first mechanism element (8) is assigned an anti-rotation safeguard (15) which prevents a rotation of the first mechanism element (8) about the rotational axis (10) while ensuring the axial displaceability.

13. Ball joint according to one of the preceding claims, **characterized in that** the mechanism (7) is assigned a spring unit (21), by way of which the two mechanism elements (8, 9) can be prestressed axially against one another.

14. Ball joint according to one of the preceding claims, **characterized by** a device, by way of which a set rotary angle of the second mechanism element (9) can be assigned to an axial force which is exerted on the movable housing part (6), and can be stored.

15. Ball joint according to Claim 14, **characterized in that** the device can be operated to specify a rotary angle of the second mechanism element (9), which rotary angle is required to set a desired axial force, on the basis of the stored relationship between the rotary angle and the axial force.

16. Mechanism (7) for a ball joint (1) according to one of the preceding claims, having a first and a second mechanism element (8, 9), on which in each case one single ball track (11, 12) which runs helically in relation to a rotational axis (10) is configured, the first and the second mechanism element (8, 9) being supported on one another in the axial direction (10) via at least one ball (13) which is guided between the ball tracks (11, 12) of the mechanism elements (8, 9), and the first mechanism element (8) being mounted in an axially displaceable manner, whereas the second mechanism element (9) is mounted such that it can be rotated about the rotational axis (10), with the result that the first mechanism element (8) can be displaced axially by way of rotation of the second mechanism element (9).

## Revendications

1. Articulation sphérique (1) à résistance au frottement variable, destinée en particulier à un véhicule, l'articulation sphérique comprenant :
un pivot sphérique (2) pourvu d'une sphère d'articulation (3) qui est logée dans un logement d'articulation (4) de manière articulée par rapport à celui-ci ; le logement d'articulation (4) comprenant deux parties de logement (5, 6) mobiles relativement l'une à l'autre et s'engageant sur des côtés opposés de la sphère d'articulation (3), et
une transmission (7) permettant de déplacer l'une au moins des parties de boîtier (6) afin d'exercer une pression variable sur la sphère d'articulation (3),
la transmission (7) comportant des premier et deuxième éléments de transmission (8, 9),
**caractérisée en ce qu'**un chemin de billes unique (11, 12) en forme d'hélice par rapport à un axe de rotation (10) est conçu au niveau des premier et deuxième éléments de transmission (8, 9),
les premier et deuxième éléments de transmission (8, 9) étant en appui l'un sur l'autre dans la direction axiale (10) par le biais d'au moins une bille (13) guidée par les chemins de billes (11, 12) des éléments de transmission (8, 9) et
le premier élément de transmission (8) étant logé de manière à pouvoir coulisser axialement et pouvant être amené en contact sous pression avec la partie de boîtier mobile (6) tandis que le deuxième élément de transmission (9) est logé de manière à pouvoir tourner sur l'axe de rotation (10) de sorte que la rotation du deuxième élément de transmission (9) permet de faire coulisser axialement le premier élément de transmission (8) afin d'exercer une force axiale (F) sur la partie de boîtier mobile (6).

2. Articulation sphérique selon la revendication 1, **caractérisée en ce que** les premier et deuxième éléments de transmission (8, 9) sont chacun conçus sous la forme d'un corps au moins en partie en forme de disque, sur une face axiale dsquels est conçu un plan incliné périphérique recevant le chemin de billes (11, 12).

3. Articulation sphérique selon la revendication 1 ou 2, **caractérisée en ce que** le nombre de billes (13) guidées entre les éléments de transmission (8, 9) est d'au moins trois, de préférence exactement trois.

4. Articulation sphérique selon l'une des revendications précédentes, **caractérisée en ce que** le deuxième élément de transmission (9) peut être entraîné en rotation depuis l'extérieur par le biais d'un moyen d'engagement par complémentarité de formes (17), en particulier une denture formée sur celui-ci.

5. Articulation sphérique selon l'une des revendications précédentes, **caractérisée en ce qu'**une cage à billes (14), servant à guider l'au moins une bille (13) le long du chemin de billes (11, 12), est disposée entre les éléments de transmission (8, 9).

6. Articulation sphérique selon la revendication 5, **caractérisée en ce que** la cage à billes (14) est un composant sensiblement en forme de disque.

7. Articulation sphérique selon la revendication 5 ou 6, **caractérisée en ce que** la cage à billes (14) présente sur ses faces axiales un contour extérieur qui est conçu de manière sensiblement complémentaire d'un contour extérieur opposé de l'élément de transmission adjacent (8, 9).

8. Articulation sphérique selon l'une des revendications 5 à 7, **caractérisée en ce qu'**une pluralité d'évidements (23), correspondant au nombre de billes (13), est prévue sur la cage à billes (14) pour recevoir au moins partiellement une bille (13).

9. Articulation sphérique selon l'une des revendications précédentes, **caractérisée en ce que** les premier et deuxième éléments de transmission (8, 9), de préférence également la cage à billes (14), sont reliés l'un à l'autre par complémentarité de formes une fois installés de sorte que la liaison par complémentarité de formes empêche un mouvement de translation de ces composants (8, 9, 14) dans un plan perpendiculaire à l'axe de rotation (10), tout en permettant aux composants (8, 9, 14) de tourner l'un par rapport à l'autre sur l'axe de rotation (10).

10. Articulation sphérique selon l'une des revendications précédentes, **caractérisée en ce qu'**une partie cylindrique (16) est conçue au niveau du premier élément de transmission (8), laquelle passe à travers une ouverture de passage cylindrique (24) ménagée dans la cage à billes (14) et pénètre dans un évidement cylindrique ménagé au niveau du deuxième élément de transmission (9).

11. Articulation sphérique selon l'une des revendications précédentes, **caractérisée en ce qu'**une butée (18) est conçue au niveau de chacun des premier et deuxième éléments de transmission (8, 9), laquelle correspond à une butée (20), conçue au niveau de la cage à billes (14), pour spécifier une position initiale de la transmission (7).

12. Articulation sphérique selon l'une des revendications précédentes, **caractérisée en ce que** le premier élément de transmission (8) est associé à une sécurité anti-rotation (15) qui empêche la rotation du premier élément de transmission (8) sur l'axe de rotation (10) tout en garantissant le coulissement axial.

13. Articulation sphérique selon l'une des revendications précédentes, **caractérisée en ce que** la transmission (7) est associée à une unité à ressort (21) permettant de précontraindre les deux éléments de transmission (8, 9) axialement l'un contre l'autre.

14. Articulation sphérique selon l'une des revendications précédentes, **caractérisée par** un dispositif permettant d'associer un angle de rotation réglé du deuxième élément de transmission (9) à une force axiale exercée sur la partie de boîtier mobile (6) et de la mémoriser.

15. Articulation sphérique selon la revendication 14, **caractérisée en ce que** le dispositif peut être commandé pour régler un angle de rotation, nécessaire à la force axiale souhaitée, du deuxième élément de transmission (9) sur la base de la relation mémorisée entre l'angle de rotation et la force axiale.

16. Transmission (7) pour une rotule (1) selon l'une des revendications précédentes, comprenant des premier et deuxième éléments de transmission (8, 9) sur chacun desquels est réalisée un chemin de billes unique (11, 12) s'étendant de manière hélicoïdale par rapport à un axe de rotation (10),
les premier et deuxième éléments de transmission (8, 9) étant en appui l'un sur l'autre dans la direction axiale (10) par le biais d'au moins une bille (13) guidée entre les chemins de billes (11, 12) des éléments de transmission (8, 9) et le premier élément de transmission (8) étant logé de manière à pouvoir coulisser axialement, tandis que le deuxième élément de transmission (9) est logé de manière à pouvoir tourner sur l'axe de rotation (10) de sorte que la rotation du deuxième élément de transmission (9) permette de faire coulisser axialement le premier élément de transmission (8).
